Europäisches Patentamt

European Patent Office

Office européen des brevets

(11) Publication number: **0 148 110**
**B1**

(12) **EUROPEAN PATENT SPECIFICATION**

(45) Date of publication of patent specification: 02.03.88

(21) Application number: 84710035.1

(22) Date of filing: 15.12.84

(51) Int. Cl.⁴: **C 09 K 11/58,** C 09 K 11/74, C 09 K 11/72, C 09 K 11/84, H 01 J 29/18

(54) **White-emitting phosphor.**

(30) Priority: 28.12.83 JP 245623/83

(43) Date of publication of application:
10.07.85 Bulletin 85/28

(45) Publication of the grant of the patent:
02.03.88 Bulletin 88/09

(84) Designated Contracting States:
DE FR GB IT

(56) References cited:
FR-A-1 091 904
US-A-4 406 971

PATENTS ABSTRACTS OF JAPAN, volume 7,
no. 148, (E-184)(1293) June 29, 1983, & JP - A -
58-61 547 (NIPPON DENKI K.K.) 12-04-1983

(73) Proprietor: **International Business Machines Corporation**
**Old Orchard Road**
**Armonk, N.Y. 10504 (US)**

(72) Inventor: **Toyokawa, Kazuharu**
**2-17-1, Chuorinkan Yamato-shi**
**Kanagawa-ken (JP)**
Inventor: **Ohtani, Hiroko**
**1-2-23, Sonan Sagamihara-shi**
**Kanagawa-ken (JP)**

(74) Representative: **Kreidler, Eva-Maria, Dr. rer. nat.**
**Schönaicher Strasse 220**
**D-7030 Böblingen (DE)**

**Description**

This invention relates to a white-emitting phosphor, and more particularly to a white-emitting phosphor with a high luminance and a long persistency for black-and-white cathode ray tubes.

Cathode ray tubes (hereinafter referred to as CRTs) are widely used as computer terminal displays. Especially in document processing systems, it is recommended that characters and graphics are displayed in black and white like the documents in order to provide natural display.

White-emitting phosphors are widely used in conventional black-and-white home television receivers, and known as typical one is P4 phosphor. Since television receivers basically serve to display animations, a short persistent phosphor is usually used in television sets to prevent an obstructing afterimage from appearing. However, if such a short persistent phsphor is used in computer terminal displays which serve to display stationary pictures, especially if it is used for high-resolution full-page displays which display a whole page of documents, flicker occurs. Although this flicker problem can be solved if the picture frequency or the frame frequency is increased, this approach is prohibitive in circuit design and cost. Therefore, long persistent green phosphors, typically P39, have been used in most conventional computer terminal displays, but as mentioned above, computer terminal displays capable of black-and-white display are desired and the development of a long persistent white-emitting phosphor has been expected.

Japanese Published Examined Patent Application 57-37098 (1982) discloses the formation of a long persistent white phosphor by mixing a short persistent blue phosphor component, a long persistent green phosphor component, and a long persistent red phosphor component. The prior art invention is based upon the finding that white emission of long persistency can apparently be obtained if the mixture of blue, green and red phosphors contains at least one long persistent phosphor component even though their persistencies are different. The prior art illustrates silver-activated zinc sulfide (ZnS:Ag) as the blue phosphor component, manganese-arsenic-activated zinc silicate ($Zn_2SiO_4$:Mn, As) as the green phosphor component, and manganese-activated zinc magnesium orthophosphate [$(Zn, Mg)_3(PO_4)_2$:Mn] as the red phosphor component.

According to the above prior art, the time from which the cathode ray excitation ceases until the time brightness decays to 1/10, or 10% persistency time, is 30 ms or more, and a satisfactory result is obtained. However, the luminance of this white phosphor is about 20 fL at CRT electron beam acceleration voltage 15 kV and electron beam current density 0.185 $\mu A/cm^2$, and is almost unpractical for high-resolution display.

Japanese Published Patent Application 58-61547 (1983) discloses the formation of a white luminous element by mixing of 1~3 mol % of a red phosphor ($Y_2O_2S$:Eu) with a green phosphor (ZnS:CuAuAl or $Zn_2SiO_4$:MnAs) and a blue phosphor (ZnS:Ag). As a result, a fluorescent screen without any color nonuniformities can be obtained.

It is the object of this invention to provide a white-emitting phosphor with a high luminance and a long persistency.

The above object of this invention is achieved by forming a uniform mixture of a long persistent green-emitting phosphor component of $Zn_2SiO_4$:Mn, As; a blue-emitting phosphor component of ZnS:Ag; and an orange-emitting phosphor component of $3Cd_3(PO_4)_2 \cdot CdCl_2$:Mn.

Since the black-and-white display is not required to produce three primary colors, there is no limitation in the colors produced by the phosphor components mixed. In other words, when a white phosphor is produced, phosphor components which produce three primary colors are not necessarily required. As the result of experiments based on such understanding, it was found that a white phosphor can be obtained when an orange phosphor component is used in place of a red phosphor component, and that the luminance of the white phosphor is significantly improved.

As the orange phosphor component manganese-activated cadmium chlorophosphate $3Cd_3(PO_4)_2 \cdot CdCl_2$:Mn can be used. As the green phosphor component, manganese-arsenic-activated zinc silicate ($Zn_2SiO_4$:Mn, As) with a long persistency and a high luminance can be used. As the blue phosphor component, ZnS:Ag can be used. Although other blue phosphors of ZnS:Ag, Ga type have been proposed which have longer persistencies than ZnS:Ag, their luminances are 60—70% of that of ZnS:Ag, and the luminance of the resultant white phosphor was found to decrease considerably. Since the peristency characteristics of white luminescence is greatly dominated by $Zn_2SiO_4$:Mn, As, the other phosphor components should be of a luminance as high as possible. It has been found that the combination of phosphor components of this invention provides the best result in overall characteristics of persistency and luminance of the white phosphor.

The typical characteristics of phosphor components used in the inventive white phosphors are as follows:

| Phosphor component | Luminescence color | Luminance (fL) | 10% Persistency (ms) |
|---|---|---|---|
| $Zn_2SiO_4$:Mn, As | Green | 45 | 80 |
| SnS:Ag | Blue | 19 | 2 |
| $3Cd_3(PO_4)_2 \cdot CdCl_2$:Mn | Orange | 46 | 37 |

2

Since the persistency of $Zn_2SiO_4$:Mn, As is very long, apparently white emission of long persistency can be obtained effectively based on the principle disclosed in the Patent described above, regardless of short persistencies of the other components. The persistency and luminance characteristics of the resultant white phosphor depend on the persistency and luminance characteristics of each phosphor component and the mixing ratio.

The phosphor components are mixed so that a white luminescence in the CIE chromaticity coordinate system is obtained and still the desired high luminance and long persistency can be obtained. In a high-resolution display such as a full-page display, a luminance of 30 fL or more, and a 10% persistency of 30 ms or more are requested. According to this invention, these requirements can be satisfied within a relatively wide range of mixing ratios. The usable mixing ratios (% by weight) of the phosphor components are as follows:

| Phosphor component | Mixing ratio (% by weight) |
| --- | --- |
| $Zn_2SiO_4$:Mn, As | 16—38 |
| ZnS:Ag | 3—40 |
| $3Cd_3(PO_4)_2 \cdot CdCl_2$:Mn | 31—81 |

$Zn_2SiO_4$:Mn, As has a large effect on persistency and luminance characteristics, $3Cd_3(PO_4)_2 \cdot CdCl_2$:Mn has a large effect on luminance. If the content of $Zn_2SiO_4$:Mn, As is less than the minimum content of each type, neither the desired persistency nor the white color can be obtained, and if it exceeds the maximum content of each type, there is no white color although persistency and luminance may be improved. If the content of $3Cd_3(PO_4)_2 \cdot CdCl_2$:Mn is less than each minimum content, white color cannot be obtained, and if they exceed each maximum content, white color cannot be obtained although luminance may be improved. The main role of ZnS:Ag is to produce white color without considerably lowering luminance. If the mixing ratio of $Zn_2SiO_4$:Mn, As and $3Cd_3(PO_4)_2 \cdot CdCl_2$:Mn is determined, the content of ZnS:Ag is automatically determined as the remainder.

As well known, the white phosphor screen is produced by the gravity sedimentation of phosphor particles from the suspension in which mixed phosphor particles are evenly dispersed.

The invention is described in more detail with reference to the embodiments and the drawing.

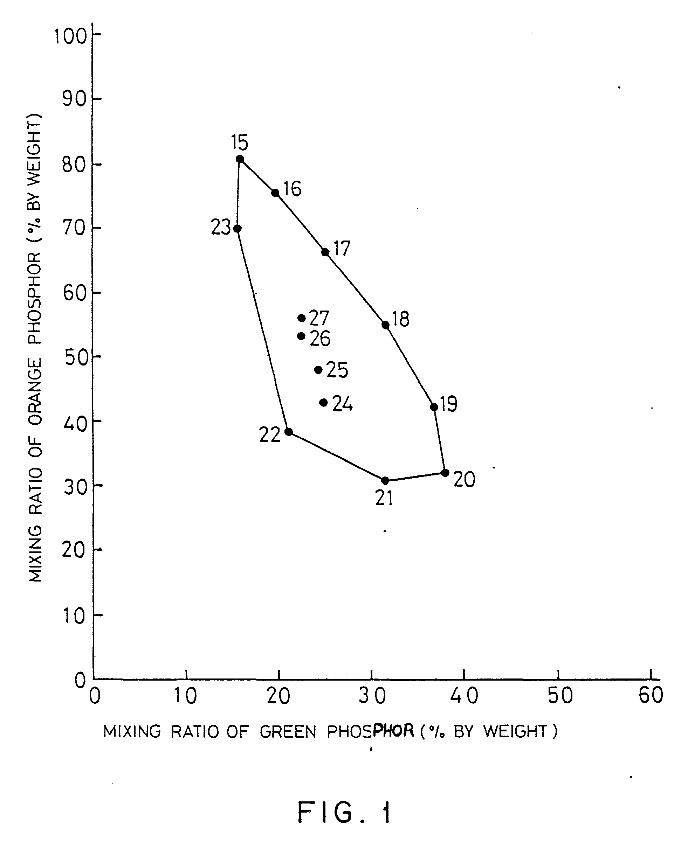

Figure 1 shows the range of preferable mixing ratios of orange and green phosphor components of the inventive white phosphors.

Embodiments 15—27

Table 1 shows embodiments 15—23 of the inventive phosphor. These embodiments are chosen along the boundary of the range within which the desired high luminace and long persistency characteristics are obtained in the white region of the CIE chromaticity coordinate system. In Table 1, orange represents $3Cd_3(PO_4)_2 \cdot CdCl_2$:Mn; green $Zn_2SiO_4$:Mn, As; blue ZnS:Ag. In the range of Table 1, a luminance of about 30 fL or higher and a 10% persistency of about 47 ms or longer are obtained.

# 0 148 110

## TABLE 1

| Embodiment | CIE chromaticity coordinate | | Mixing ratio (% by weight) | | | Luminance (fL) | 10% persistency (ms) |
|---|---|---|---|---|---|---|---|
| | x | y | Orange | Green | Blue | | |
| 15 | 0.43 | 0.45 | 81 | 16 | 3 | 31 | 50 |
| 16 | 0.40 | 0.45 | 75 | 20 | 5 | 33 | 51 |
| 17 | 0.35 | 0.43 | 67 | 25 | 8 | 35 | 53 |
| 18 | 0.30 | 0.40 | 55 | 32 | 13 | 38 | 55 |
| 19 | 0.25 | 0.35 | 42 | 37 | 21 | 40 | 56 |
| 20 | 0.22 | 0.30 | 32 | 38 | 30 | 40 | 56 |
| 21 | 0.21 | 0.25 | 31 | 31 | 38 | 36 | 53 |
| 22 | 0.21 | 0.21 | 39 | 21 | 40 | 31 | 47 |
| 23 | 0.33 | 0.33 | 70 | 16 | 14 | 30 | 48 |

Figure 1 shows the mixing ratios of the orange and green phopshor components, in which numbers indicate corresponding embodiments. The orange and green phosphors can be used within the range of mixing ratios of Figure 1.

Table 2 shows preferable embodiments selected within the range of Table 1.

## TABLE 2

| Embodiment | CIE chromaticity coordinate | | Mixing ratio (% by weight) | | | Luminance (fL) | 10% persistency (ms) |
|---|---|---|---|---|---|---|---|
| | x | y | Orange | Green | Blue | | |
| 24 | 0.22 | 0.25 | 43 | 26 | 31 | 33 | 72 |
| 25 | 0.27 | 0.31 | 48 | 25 | 27 | 30 | 56 |
| 26 | 0.27 | 0.30 | 53 | 23 | 24 | 36 | 57 |
| 27 | 0.25 | 0.27 | 56 | 23 | 21 | 37 | 82 |

The orange-green mixing ratios of the embodiments 24—27 are plotted in Figure 1 with the respective embodiment numbers. The inventive phosphors generally have longer persistency as prior art phosphors.

## Claim

White-emitting phosphor comprising 16 to 38% by weight of $Zn_2SiO_4$:Mn, As; 3 to 40% by weight of ZnS:Ag; and 31 to 81% by weight of $3Cd_3(PO_4)_2CdCl_2$:Mn.

## Patentanspruch

Wießstrahlender Phopshor mit 16 bis 38 Gewichtsprozent $Zn_2SiO_4$:Mn, As; 3 bis 40 Gewichtsprozent ZnS:Ag; sowie 31 bis 81 Gewichtsprozent $3Cd_3(PO_4)_2$ $CdCl_3$:Mn.

## Revendications

Corps cathodoluminescent émettant le blanc comprenant de 16 à 38% en poids de $Zn_2SiO_4$:Mn, As; de 3 à 40% en poids de ZnS:Ag; et de 31 à 81% en poids de $3Cd_3(PO_4)_2$ $CdCl_2$:Mn.

FIG. 1